# EUROPEAN PATENT APPLICATION

(11) **EP 4 660 025 A1**
(43) Date of publication of application: **10.12.2025**
(21) Application number: 24750361.8
(22) Date of filing: 31.01.2024
(51) Int. Cl.: B60T 8/17, B60T 13/138

(54) **VEHICLE BRAKE SYSTEM**

(30) Priority: 31.01.2023 JP 2023012754
(71) Applicant: Astemo, Ltd., Chiyoda-ku, Tokyo 1000004 (JP)
(72) Inventor: KOBAYASHI Masashi, Hitachinaka-shi, Ibaraki 312-8503 (JP); MIYAHARA Kimio, Hitachinaka-shi, Ibaraki 312-8503 (JP)
(74) Representative: Weickmann & Weickmann PartmbB
(86) International application number: PCT/JP2024/003171
(87) International publication number: WO 2024/162412

(57) **Abstract**

A vehicle brake system reduces parts in number, reduces costs, and improves performance in increasing brake hydraulic pressure, while preventing system components from increasing in size. The vehicle brake system includes: a hydraulic pressure generator (1) having a slave cylinder (30) driven by an electric actuator (36) to generate brake hydraulic pressure; and a hydraulic pressure controller (2) to use the brake hydraulic pressure from the hydraulic pressure generator (1) to control brake hydraulic pressure acting on wheel brakes. The hydraulic pressure controller (2) includes: a pressure regulating valve (R) provided in a hydraulic passage leading to the wheel brakes and configured to regulate a difference in brake hydraulic pressure between the hydraulic pressure generator (1) and the wheel brakes; a release passage (C) into which brake fluid released from the wheel brakes flows; a pump (45) configured to suction brake fluid in the release passage (C) and discharge brake fluid to the hydraulic passage; and a supply unit (15) provided upstream of the slave cylinder (30) and configured to store brake fluid. The release passage (C) leads to the supply unit (15).

## Description

### TECHNICAL FIELD

The present invention relates to a vehicle brake system.

### BACKGROUND ART

A vehicle brake system has been known that includes: a master cylinder to generate brake hydraulic pressure for a force of the brake pedal being depressed; a slave cylinder driven by an electric actuator to generate brake hydraulic pressure; and a hydraulic pressure controller to control brake hydraulic pressure acting on wheel brakes to assist in stabilizing the behavior of a vehicle (see Patent Document 1, for example).

### PRIOR ART DOCUMENTS

### Patent Documents

Patent Document 1: Japanese Patent Application Publication No. 2012-210879

### SUMMARY OF THE INVENTION

### Problems to be Solved

The vehicle brake system of Patent Document 1 is configured to cause brake fluid to be suctioned into a pump via an intake valve and to cause brake fluid released from an outlet valve to be temporarily stored in a reservoir, resulting in a large number of parts and increased costs. In general, a vehicle brake system has been configured to drive a pump with a high-performance motor to improve performance in increasing brake hydraulic pressure. This could increase system components in size.

The present invention is intended to provide a vehicle brake system that solves the above-mentioned problems, reduces parts in number, reduces costs, and improves performance in increasing brake hydraulic pressure, while preventing system components from increasing in size.

### Solution to Problem

In order to solve the above-mentioned problems, a vehicle brake system of the present invention includes: a hydraulic pressure generator having a slave cylinder driven by an electric actuator to generate brake hydraulic pressure; and a hydraulic pressure controller to use the brake hydraulic pressure from the hydraulic pressure generator to control brake hydraulic pressure acting on wheel brakes. The hydraulic pressure controller includes: a pressure regulating valve provided in a hydraulic passage leading to the wheel brakes and configured to regulate a difference in brake hydraulic pressure between the hydraulic pressure generator and the wheel brakes; a release passage into which brake fluid released from the wheel brakes flows; a pump configured to suction brake fluid in the release passage and discharge brake fluid to the hydraulic passage; and a supply unit provided upstream of the slave cylinder and configured to supply brake fluid to the slave cylinder. The release passage leads to the supply unit.

The vehicle brake system of the present invention suction brake fluid directly from the supply unit during the pump being in operation. In addition, the system returns brake fluid released from the wheel brakes directly to the supply unit via the release passage. This eliminates the need of providing an intake valve upstream of the pump, and eliminates the need of separately providing a reservoir for storing brake fluid released from the wheel brakes. Accordingly, parts of the vehicle brake system can be reduced in number, resulting in reduced costs. In addition, the system has no intake valve provided upstream of the pump, to generate no resistance when brake fluid passes through such an intake valve. This improves performance in increasing brake hydraulic pressure acting on the wheel brakes. Accordingly, there is no need of driving the pump with a high-performance motor, to allow for reducing the system components in size.

Further, the supply unit is configured with a reservoir tank to supply brake fluid to the slave cylinder, to allow brake fluid to smoothly flow within the system.

Still further, when a master cylinder is provided to generate brake hydraulic pressure for an amount of a brake operator being operated, the reservoir tank is preferably connected to the master cylinder so as to supply brake fluid to the master cylinder. With this configuration, brake fluid can be supplied from a single reservoir tank via the master cylinder to the slave cylinder, to allow for reducing parts of the system in number.

Still further, the hydraulic pressure generator preferably includes a master cylinder connected to the supply unit and configured to generate brake hydraulic pressure for the amount of the brake operator being operated, and a main hydraulic passage leading from the master cylinder to the hydraulic pressure controller. Additionally, the hydraulic pressure generator preferably includes a master cut valve provided in the main hydraulic passage and configured to switch between a mode of brake hydraulic pressure from the master cylinder being applied to the hydraulic pressure controller and a mode of brake hydraulic pressure from the slave cylinder being applied to the hydraulic pressure controller, a communication passage leading from the slave cylinder to the main hydraulic passage, and a shut-off valve to open and close the communication passage. The hydraulic pressure controller preferably includes, as the hydraulic passage, an outlet hydraulic passage connected to the main hydraulic passage and a wheel hydraulic passage leading to the wheel brake. In this case, it is preferable that the pressure regulating valve can regulate a difference in brake hydraulic pressure between the outlet hydraulic passage and the wheel hydraulic passage, and the pump suctions brake fluid in the release passage and discharges brake fluid to the wheel hydraulic passage.

This configuration allows the master cut valve to switch between the connection from the master cylinder to the wheel brakes and the connection from the slave cylinder to the wheel brakes, and allows the shut-off valve to shut off fluid communication from the slave cylinder. This allows for varying the hydraulic pressure acting on the wheel brakes, without any complicated configuration, to efficiently control hydraulic pressure by suitably reacting to system conditions and vehicle conditions. Efficiently controlling hydraulic pressure, without any complicated configuration, can prevent the system from increasing in size.

Still further, the slave cylinder preferably operates during normal brake control when there is no possibility of the wheel brakes locking, during anti-lock brake control, and during automatic brake control to assist in stabilizing the behavior of a vehicle, to increase hydraulic pressure in the main hydraulic passage on a side of the master cut valve toward the hydraulic pressure controller.

This configuration allows the slave cylinder to increase brake hydraulic pressure during normal brake control, anti-lock brake control, and automatic brake control, to have good response in increasing pressure. This configuration also has an advantage that operating noise is smaller than the case of a pump being driven to increase the pressure.

Still further, the pump preferably suctions brake fluid directly from the supply unit via the release passage, only during normal brake control when there is no possibility of the wheel brakes locking and in the event that the slave cylinder has failed, to supplementarily pressurize the wheel hydraulic passage.

This configuration allows for increasing brake hydraulic pressure with the pump, in addition to increasing brake hydraulic pressure with the slave cylinder. As a result, brake hydraulic pressure can be increased by the pump, in the case where the pressure needs to be further increased, while normal brake control is in operation with the slave cylinder increasing the pressure. Accordingly, sufficient performance in increasing pressure can be obtained without increasing performance of the slave cylinder, in increasing pressure, more than necessary. This contributes to reducing the slave cylinder in size. In addition, as the pump can be driven to supplementarily pressurize the wheel hydraulic passage in the event that the slave cylinder has failed, braking is assisted with brake hydraulic pressure being increased even in the event that the slave cylinder has failed, to have excellent performance in increasing pressure in the event of a failure. Further, the frequency of the pump being driven decreases to improve durability of the pump. Furthermore, the pump is driven only in a limited manner, and the brake fluid released from the wheel brakes due to decreased pressure, during anti-lock brake control, is returned directly to the supply unit without being suctioned by the pump. Thus, there is no possibility of excessive pressurization by the pump.

Still further, the system preferably includes a control device to control the hydraulic pressure generator and hydraulic pressure controller. In this case, it is preferable that during normal brake control when there is no possibility of the wheel brakes locking, the control device controls driving the electric actuator for the amount of the brake operator being operated, switches the master cut valve so that brake hydraulic pressure from the slave cylinder is applied to the hydraulic pressure controller, and opens the shut-off valve.

This configuration allows for increasing brake hydraulic pressure during normal brake control with the slave cylinder, and implementing brake control for the amount of the brake operator being operated, with good response in increasing pressure.

Still further, when the wheel hydraulic passage needs to be supplementarily pressurized, during the normal brake control, the control device preferably sets valve opening pressure of the pressure regulating valve to a target pressure and controls driving the pump.

This configuration allows the pump to increase brake hydraulic pressure in the wheel hydraulic passage when the pressure needs to be further increased during normal brake control. This allows for obtaining sufficient performance in increasing pressure without increasing performance of the slave cylinder, in increasing pressure, more than necessary.

Still further, the system preferably includes a control device to control the hydraulic pressure generator and hydraulic pressure controller, and a valve controller to switch between fluid communication and shut-off of a fluid passage leading from the wheel hydraulic passage to the wheel brakes, and between fluid communication and shut-off of a fluid passage leading from the wheel brakes to the release passage. In this case, the control device preferably controls the valve controller to execute anti-lock brake control to switch brake hydraulic pressure acting on the wheel brakes between the pressure being decreased, the pressure being maintained, and the pressure being increased. The control device preferably controls returning brake fluid released from the wheel brakes directly to the supply unit via the release passage when the pressure is decreased during the anti-lock brake control, without controlling driving the pump.

This configuration allows for suitably implementing anti-lock brake control by the hydraulic pressure controller. Additionally, the brake fluid released by the valve controller due to decreased pressure is returned directly to the supply unit, without being suctioned by the pump, during anti-lock brake control, to have no possibility of being excessively increased by the pump.

Still further, the system preferably includes a control device to control the hydraulic pressure generator and hydraulic pressure controller. In this case, it is preferable that the control device can execute fluid suction operation for suctioning brake fluid into the slave cylinder during anti-lock brake control, and when the fluid suction operation needs to be executed, causes the shut-off valve to be closed and controls driving a piston of the slave cylinder by the electric actuator in a direction of decreasing pressure.

With this configuration, the shut-off valves are closed and a slave piston is driven in a direction of the pressure being decreased, when the fluid is suctioned during anti-lock brake control, to cause a hydraulic chamber of the slave cylinder to have negative pressure to suction brake fluid from the supply unit into the slave cylinder. This fluid suction operation allows the hydraulic chamber to be replenished with brake fluid for repressurization, to suitably secure brake fluid required for increasing the pressure. In this manner, a brake system is provided that can suitably increase hydraulic pressure to a high hydraulic pressure range, while preventing the slave cylinder from increasing in size. Besides, the brake fluid released to the release passage due to decreased pressure in the wheel brakes is returned to the supply unit via a through passage, to allow for suitably secure the brake fluid required for fluid suction operation.

Still further, the system preferably includes a control device to control the hydraulic pressure generator and hydraulic pressure controller. In this case, it is preferable that the control device can execute automatic brake control to assist in stabilizing the behavior of a vehicle, and when the automatic brake control needs to be executed, controls driving the electric actuator, switches the master cut valve to the mode of brake hydraulic pressure from the slave cylinder being applied to the hydraulic pressure controller, and opens the shut-off valve.

This configuration allows for using the slave cylinder to increase brake hydraulic pressure during automatic brake control, to implement automatic brake control with good response in increasing pressure. This stabilizes the behavior of a vehicle.

Still further, the system preferably includes a control device to control the hydraulic pressure generator and hydraulic pressure controller. In this case, it is preferable that when the wheel hydraulic passage needs to be supplementarily pressurized in the event that the slave cylinder has failed, the control device sets valve opening pressure of the pressure regulating valve to a target pressure and controls driving the pump.

This configuration allows for driving the pump to supplementarily pressurize the wheel hydraulic passage, in the event that the slave cylinder has failed, to implement assisting in braking with the brake hydraulic pressure being increased, even in the event that the slave cylinder has failed. This configuration thus gives excellent performance in increasing pressure in the event of a failure.

Still further, the main hydraulic passage preferably includes a first main hydraulic passage leading to at least one of the wheel brakes, and a second main hydraulic passage leading to the rest of the wheel brakes. In this case, the master cylinder preferably has two hydraulic chambers configured to output hydraulic pressure generated by the master cylinder to the first and second main hydraulic passages. Likewise, the slave cylinder preferably has one hydraulic chamber configured to output hydraulic pressure generated by the slave cylinder to the first and second main hydraulic passages. It is also preferable that the master cut valve, communication passage, and shut-off valve are provided in each of the first and second main hydraulic passages.

With this configuration, the brake hydraulic pressure generated from a single hydraulic pressure chamber is transmitted to the different wheel brakes from each other, when the brake operator is operated while the master cut valve staying open. This provides a vehicle brake system that can be suitably applied to a hydraulic circuit with multiple wheel brakes.

### Advantageous Effects of The Invention

The vehicle brake system of the present invention allows for reducing parts in number, to reduce costs, and also improving performance in increasing brake hydraulic pressure.

### BRIEF DESCRIPTION OF DRAWINGS

[FIG. 1] shows a hydraulic circuit of a vehicle brake system according to a first embodiment of the present invention;
[FIG. 2] shows a chart with operation, during brake control, of units in the vehicle brake system according to the first embodiment of the present invention;
[FIG. 3] illustrates a flow of brake fluid, during normal brake control, in the vehicle brake system according to the first embodiment of the present invention;
[FIG. 4] illustrates a flow of brake fluid supplementarily pressurized, during normal brake control, in the vehicle brake system according to the first embodiment of the present invention;
[FIG. 5] illustrates a flow of brake fluid, when the pressure being decreased during anti-lock brake control, in the vehicle brake system according to the first embodiment of the present invention;
[FIG. 6] illustrates a flow of brake fluid at fluid suction operation, during anti-lock brake control, in the vehicle brake system according to the first embodiment of the present invention;
[FIG. 7] shows a timing chart of fluid suction operation, during anti-lock brake control, in the vehicle brake system according to the first embodiment of the present invention;
[FIG. 8] shows a flow of brake fluid, during automatic brake control, in the vehicle brake system according to the first embodiment of the present invention;
[FIG. 9] shows a flow of brake fluid, during backup control, in the vehicle brake system according to the first embodiment of the present invention;
[FIG. 10] shows a flow of brake fluid at supplementary pressurization, during backup control, in the vehicle brake system according to the first embodiment of the present invention; and
[FIG. 11] shows a hydraulic circuit of a vehicle brake system according to a second embodiment of the present invention.

### DETAILED DESCRIPTION OF THE EMBODIMENTS

Hereinafter, embodiments of the present invention are described in detail, with reference to the drawings as required. In the drawings described below, the same components have the same reference signs assigned thereto, and duplicated descriptions thereof are skipped. A vehicle brake system 100 of the present invention can be installed in a hybrid vehicle to use a motor together, an electric vehicle or a fuel cell vehicle powered only by a motor, and a vehicle powered only by an engine (internal combustion engine).

### (First Embodiment)

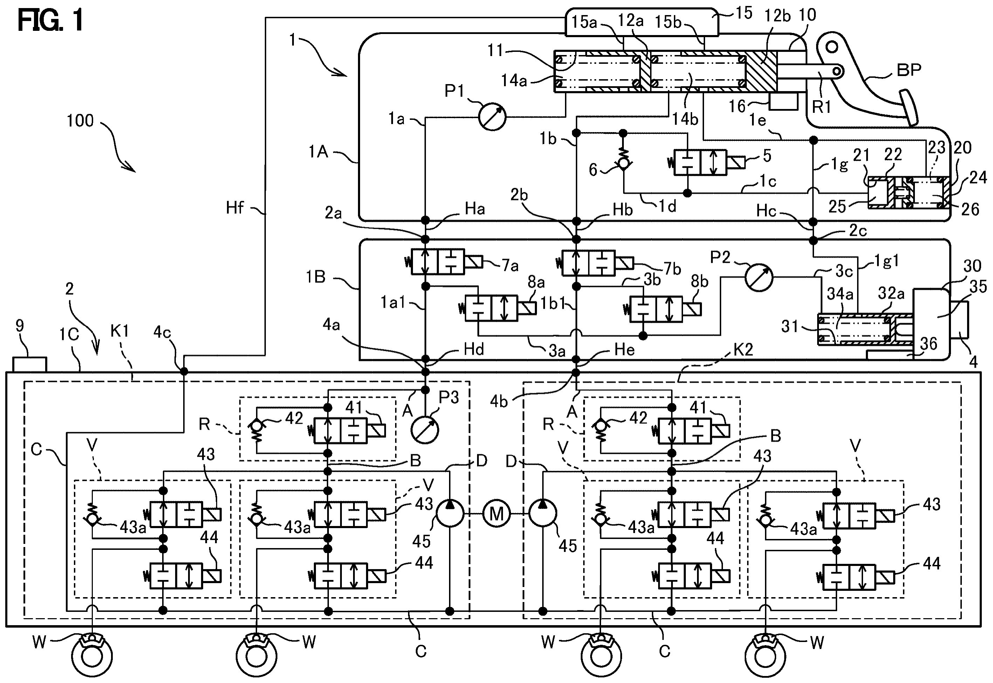

As shown in FIG. 1, the vehicle brake system 100 includes both a by-wire brake system actuated when a prime mover (such as an engine and an electric motor) is started, and a hydraulic brake system actuated such as when the prime mover is stopped. The hydraulic brake system allows assisting in braking by way of supplementary pressurization, to be described below, in the event that a slave cylinder 30 has failed.

The vehicle brake system 100 includes a hydraulic pressure generator 1 to generate brake hydraulic pressure for an amount of stroke (amount of operation) of a brake pedal BP (brake operator), and a hydraulic pressure controller 2 connected to the hydraulic pressure generator 1 and configured to control brake hydraulic pressure acting on wheel cylinders W of wheel brakes. The vehicle brake system 100 is composed of three bases (three blocks) consisting of bases 1A and 1B in which components of the hydraulic pressure generator 1 are installed, and a base 1C in which components of the hydraulic pressure controller 2 are installed.

The base 1A includes a master cylinder 10 and a stroke simulator 20. The base 1B includes a slave cylinder 30. The master cylinder 10 functions as an input device to generate brake hydraulic pressure for an amount of stroke of the brake pedal BP. The stroke simulator 20 applies a pseudo reaction force to the brake pedal BP. The slave cylinder 30 generates brake hydraulic pressure using an electric motor 36 of an electric actuator as a drive source. As described below, the slave cylinder 30 operates during normal brake control when there is no possibility of the wheel brakes locking, during anti-lock brake control, and during automatic brake control to assist in stabilizing the behavior of a vehicle, to increase brake hydraulic pressure at the hydraulic pressure controller 2. In other words, the slave cylinder 30 is responsible for all cases of increasing the brake hydraulic pressure at the hydraulic pressure controller 2.

The master cylinder 10 has two pistons 12a, 12b inserted into a first cylinder bore 11 in the base 1A. A bottom-end pressure chamber 14a is defined between a bottom surface in the first cylinder bore 11 and the bottom-end piston 12a. Likewise, an open-end pressure chamber 14b is defined between the bottom-end piston 12a and the open-end piston 12b. The master cylinder 10 has a reservoir tank 15 attached thereto as a supply unit to supply brake fluid to the master cylinder 10 and slave cylinder 30. The reservoir tank 15 has supply ports 15a and 15b to supply brake fluid to the master cylinder 10. The hydraulic pressure generated by the master cylinder 10 is outputted to each of a first main hydraulic passage 1a and a second main hydraulic passage 1b, which are described below.

A rod R1 of the brake pedal BP is connected at its distal end to the open-end piston 12b.Both of the pistons 12a and 12b slide in the first cylinder bore 11 upon receiving a force of the brake pedal BP being depressed, to pressurize brake fluid in the bottom-end pressure chamber 14a and the open-end pressure chamber 14b. The master cylinder 10 has a stroke sensor 16 attached thereto, to detect the amount of operation (amount of being depressed) on the brake pedal BP.

The stroke simulator 20 includes a piston 22 inserted into a second cylinder bore 21 in the base 1A, a cover member 24 to close an opening of the second cylinder bore 21, and a coil spring 23 held between the piston 22 and the cover member 24.

A pressure chamber 25 is defined between a bottom surface in the second cylinder bore 21 and the piston 22. The pressure chamber 25 leads to the open-end pressure chamber 14b in the first cylinder bore 11 via a first branch hydraulic passage 1c, a second branch hydraulic passage 1d, and the second main hydraulic passage 1b (which are described below).

A reservoir tank communication passage 1e is connected to a back pressure chamber 26 in which the coil spring 23 is provided. The reservoir tank communication passage 1e is in fluid communication with the reservoir tank 15 (at atmospheric pressure) via the master cylinder 10 and supply port 15b.

In the stroke simulator 20, the piston 22 is moved against a biasing force of the coil spring 23, with the brake hydraulic pressure increased in the open-end pressure chamber 14b. The biased piston 22 then applies a pseudo reaction force to the brake pedal BP.

The slave cylinder 30 includes a single slave piston 32a inserted into a third cylinder bore 31 in the base 1B, an electric motor 36, and a driving force transmitter 35. A pressure chamber 34a is defined between a bottom surface in the third cylinder bore 31 and the slave piston 32a.

The pressure chamber 34a has a slave cylinder supply passage 1g1 connected thereto. The slave cylinder supply passage 1g1 leads to a supply passage 1g of the base 1B via a pipe Hc connected to a connection port 2c of the base 1B. The supply passage 1g branches off within the base 1B from the reservoir tank communication passage 1e. As a result, the pressure chamber 34a of the slave cylinder 30 is in fluid communication with the reservoir tank 15 via the slave cylinder supply passage 1g1, pipe Hc, supply passage 1g, and reservoir tank communication passage 1e.

The electric motor 36 of the slave cylinder 30 is an electric servo motor controlled by a control device 4, to be described below, over driving the motor. The driving force transmitter 35 is a mechanism to convert a rotational drive force by an output shaft of the electric motor 36 into a linear axial force. The driving force transmitter 35 is formed of a ball screw mechanism, for example. When the output shaft of the electric motor 36 rotates and its rotational drive force is inputted to the driving force transmitter 35, a rod 35a of the driving force transmitter 35 moves forward and backward. A distal end of the rod 35a abuts against the slave piston 32a. The slave piston 32a slides within the third cylinder bore 31 upon receiving an input from the rod 35a, to pressurize brake fluid in the pressure chamber 34a.

The control device 4 is attached to a side of the base 1B, for example, and contains a control board in a housing. The control device 4 controls operation of the electric motor 36 and opening and closing of the valves, based on information obtained from the stroke sensor 16 and various sensors, programs stored in advance, and the like. The control device 4 is a dedicated control device for the hydraulic pressure generator 1. The control device 4 also has a function of executing fluid suction operation. The fluid suction operation is an operation for actively suctioning brake fluid into the pressure chamber 34a of the slave cylinder 30 via the slave cylinder supply passage 1g1 to secure brake fluid in the slave cylinder 30. The fluid suction operation is executed during anti-lock brake control, for example, when brake fluid needs to be secured for the slave cylinder 30 to increase hydraulic pressure. The fluid suction operation is also executed when the brake fluid is secured in advance in preparation for subsequent pressurization, in a mode of hydraulic pressure generated by the slave cylinder 30 having reached the hydraulic pressure required by the driver (this mode is called "steady mode"), for example.

Next, the hydraulic passages formed in the base 1A are described. The base 1A is provided therein with the first main hydraulic passage 1a and second main hydraulic passage 1b as main hydraulic passage leading to the master cylinder 10, and the first branch hydraulic passage 1c branching off from the second main hydraulic passage 1b.

The first main hydraulic passage 1a is a hydraulic passage starting from the bottom-end pressure chamber 14a in the first cylinder bore 11. The first main hydraulic passage 1a is provided therein with a first pressure sensor P1. The first pressure sensor P1 detects the brake hydraulic pressure generated by the master cylinder 10. The first main hydraulic passage 1a has a pipe Ha leading to the base 1B of the hydraulic pressure controller 2 connected to an outlet port as an end point thereof.

The second main hydraulic passage 1b is a hydraulic passage starting from the open-end pressure chamber 14b in the first cylinder bore 11. The second main hydraulic passage 1b has a pipe Hb leading to the base 1B of the hydraulic pressure controller 2 connected to an outlet port as an end point thereof.

The first branch hydraulic passage 1c is a hydraulic passage leading from the second main hydraulic passage 1b to the pressure chamber 25 of the stroke simulator 20. The first branch hydraulic passage 1c is provided therein with a simulator valve 5. The simulator valve 5 is a normally-closed solenoid valve to open and close the first branch hydraulic passage 1c.

The second branch hydraulic passage 1d is a hydraulic passage leading from the second main hydraulic passage 1b to the first branch hydraulic passage 1c. The second branch hydraulic passage 1d is in fluid communication with the first branch hydraulic passage 1c on a side of the simulator valve 5 toward the pressure chamber 25. The second branch hydraulic passage 1d is provided therein with a check valve 6. The check valve 6 is connected in parallel to the simulator valve 5. The check valve 6 allows brake fluid to flow only in a direction from the pressure chamber 25 to the first cylinder bore 11.

The base 1B is provided therein with a first main hydraulic passage 1a1 leading to the first main hydraulic passage 1a and a second main hydraulic passage 1b1 leading to the second main hydraulic passage 1b. The first main hydraulic passage 1a1 leads to the first main hydraulic passage 1a via the pipe Ha connected to a connection port 2a. Likewise, the second main hydraulic passage 1b1 leads to the second main hydraulic passage 1b via the pipe Hb connected to a connection port 2b.

The first main hydraulic passage 1a1 is provided therein with a first master cut valve 7a as a master cut valve. The first master cut valve 7a is a normally-open solenoid valve to open and close the first main hydraulic passage 1a1. The second main hydraulic passage 1b1 is provided therein with a second master cut valve 7b as a master cut valve. The second master cut valve 7b is a normally-open solenoid valve to open and close the second main hydraulic passage 1b1.

The base 1B is also provided therein with a first communication passage 3a and a second communication passage 3b as communication passages leading from the slave cylinder 30 to the first main hydraulic passage 1a1 and second main hydraulic passage 1b1. The first communication passage 3a is a hydraulic passage leading from the pressure chamber 34a of the third cylinder bore 31 to the first main hydraulic passage 1a1, and is in fluid communication with a common communication passage 3c connected to the pressure chamber 34a. The first communication passage 3a is connected, at its end, to downstream of the first master cut valve 7a. The first communication passage 3a is provided with a first shut-off valve 8a as a shut-off valve to open and close the first communication passage 3a. The first shut-off valve 8a is a normally-closed solenoid valve.

Likewise, the second communication passage 3b is a hydraulic passage leading from the pressure chamber 34a in the third cylinder bore 31 to the second main hydraulic passage 1b1, and is in fluid communication with the common communication passage 3c connected to the pressure chamber 34a. The second communication passage 3b is connected, at its end, downstream of the second master cut valve 7b. The second communication passage 3b is provided with a second shut-off valve 8b as a shut-off valve to open and close the second communication passage 3b. The second shut-off valve 8b is a normally-closed solenoid valve.

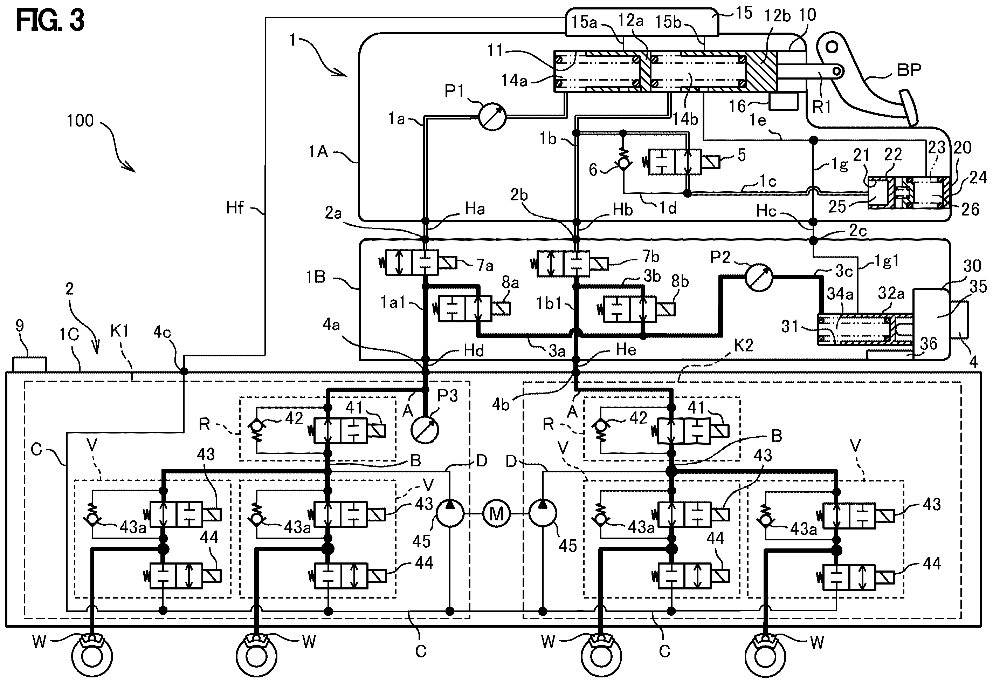

When the first master cut valve 7a is open as shown in FIG. 1 and the first shut-off valve 8a is closed, the first main hydraulic passage 1a1 has its upstream side (toward the master cylinder 10) in fluid communication with its downstream side (toward the hydraulic pressure controller 2), and the first main hydraulic passage 1a1 is shut off from the first communication passage 3a. When the first master cut valve 7a is closed as shown in FIG. 3 and the first shut-off valve 8a is open, the first main hydraulic passage 1a1 has its upstream side shut off from its downstream side, and the first communication passage 3a is in fluid communication with the downstream side of the first main hydraulic passage 1a1.

Likewise, when the second master cut valve 7b is open as shown in FIG. 1 and the second shut-off valve 8b is closed, the second main hydraulic passage 1b1 has its upstream side (toward the master cylinder 10) in fluid communication with its downstream side (toward the hydraulic pressure controller 2), and the second main hydraulic passage 1b1 is shut off from the second communication passage 3b. When the second master cut valve 7b is closed as shown in FIG. 3 and the second shut-off valve 8b is open, the second main hydraulic passage 1b1 has its upstream side shut off from its downstream side, and the second communication passage 3b is in fluid communication with the downstream side of the second main hydraulic passage 1b1.

The common communication passage 3c is provided therein with a second pressure sensor P2. The second pressure sensor P2 detects brake hydraulic pressure generated by the slave cylinder 30. Information obtained by the first pressure sensor P1 and second pressure sensor P2 is outputted to the control device 4.

The hydraulic pressure controller 2 suitably controls brake hydraulic pressure applied to the wheel cylinders W. As shown in FIG. 1, the hydraulic pressure controller 2 is provided between the hydraulic pressure generator 1 and the wheel cylinders W. The hydraulic pressure controller 2 includes a brake output system K1 to brake two of the four wheel brakes, and a brake output system K2 to brake the other two.

The base 1C of the hydraulic pressure controller 2 is provided with two inlet ports 4a, 4b. The inlet ports 4a, 4b have pipes Hd, He respectively connected thereto, where the pipes Hd, He are coupled to output ports from the base 1B of the hydraulic pressure generator 1. The base 1C of the hydraulic pressure controller 2 has the wheel cylinders W connected to output ports thereof, respectively, via pipes. The brake output system K1 leads to the first main hydraulic passages 1a, 1a1, and the brake output system K2 leads to the second main hydraulic passages 1b, 1b1. The base 1C is also provided with an inlet/outlet port 4c. The inlet/outlet port 4c has a pipe Hf connected thereto from the hydraulic pressure generator 1.

The brake output system K1 includes a regulator R as a pressure regulating valve, a valve controller V, a pump 45, a third hydraulic pressure sensor P3, and a control device 9. Note that the brake output system K2 has the same configuration as the brake output system K1 and thus a description is given in detail below of the brake output system K1.

In the following description, a hydraulic passage from the inlet port to the regulator R is referred to as an "outlet hydraulic passage A," and a hydraulic passage from the regulator R to the outlet port is referred to as a "wheel hydraulic passage B." In addition, a hydraulic passage from the wheel hydraulic passage B to a suction side of the pump 45 and the inlet/outlet port 4c is referred to as a "release passage C," and a hydraulic passage from the pump 45 to the wheel hydraulic passage B is referred to as a "discharge hydraulic passage D."

The regulator R can regulate a difference in brake hydraulic pressure between the outlet hydraulic passage A and the wheel hydraulic passage B, and has a function of switching between a mode of allowing brake fluid to flow and a mode of shutting off the flow. The regulator R also has a function of regulating brake hydraulic pressure in the wheel hydraulic passage B to a predetermined value or less, when the flow of brake fluid is shut off in the outlet hydraulic passage A. The regulator R includes a cut valve 41 and a check valve 42.

The cut valve 41 is a normally-open linear solenoid valve interposed between the outlet hydraulic passage A and wheel hydraulic passage B. The cut valve 41 switches between a mode of allowing brake fluid to flow from the outlet hydraulic passage A to the wheel hydraulic passage B and a mode of shutting off the flow. In other words, the cut valve 41 is configured to regulate valve opening pressure through control over energizing a solenoid (configured to have a function of a relief valve as well).

The cut valve 41 is closed under control of the control device 9 when supplementary pressurization operation is executed during normal brake control, as described below, and when supplementary pressurization operation is executed in the event that the slave cylinder 30 has failed. When the brake hydraulic pressure in the wheel hydraulic passage B exceeds that in the outlet hydraulic passage A and a difference in hydraulic pressure between the brake hydraulic pressure in the outlet hydraulic passage A and the brake hydraulic pressure in the wheel hydraulic passage B exceeds a force of closing the valve, the force being controlled through energization of a solenoid, the cut valve 41 releases the brake hydraulic pressure in the wheel hydraulic passage B to the outlet hydraulic passage A for regulation.

The check valve 42 is connected in parallel to the cut valve 41. The check valve 42 is a one-way valve to allow brake fluid to flow from the outlet hydraulic passage A to the wheel hydraulic passage B. The check valve 42 is provided integrally with a normally-open solenoid valve of the regulator R.

The valve controller V switches between fluid communication and shut-off of a fluid passage leading from the wheel hydraulic passage B to the wheel brakes (wheel cylinders W), and fluid communication and shut-off of a fluid passage running from the wheel brakes to the release passage C. The valve controller V increases, maintains, or decreases the brake hydraulic pressure acting on the wheel cylinders W. The valve controller V is thus configured to include an inlet valve 43, an outlet valve 44, and a check valve 43a.

The inlet valve 43, outlet valve 44, and check valve 43a are provided in each of two hydraulic passages leading to the wheel cylinders of the two wheel brakes. The inlet valve 43 is a normally-open linear solenoid valve and regulates a difference in pressure between upstream and downstream of the inlet valve 43 (valve opening pressure of the inlet valve 43) according to a value of a drive current flowing through a coil of the inlet valve 43. The inlet valve 43 is normally open to allow hydraulic pressure to be applied from the slave cylinder 30 to the wheel cylinder W. When the wheels are about to lock, the inlet valve 43 is closed under control of the control device 9, to shut off brake hydraulic pressure applied to the wheel cylinder W (i.e.; maintained).

The outlet valve 44 is a normally-closed solenoid valve interposed between the wheel cylinder W and release passage C. The outlet valve 44 is normally closed, but is opened under control of the control device 9 when the wheel is about to lock. When the outlet valve 44 opens, the brake fluid acting on the wheel cylinder W is released to the release passage C, to decrease pressure of the brake fluid acting on the wheel cylinder W.

The check valve 43a is connected in parallel to the inlet valve 43. The check valve 43a is a valve to allow brake fluid to flow only in a direction from the wheel cylinder W to the slave cylinder 30 (toward the master cylinder 10). Thus, the check valve 43a allows brake fluid to flow from the wheel cylinder W to the slave cylinder 30, even when the inlet valve 43 is closed.

The pump 45 has its suction side connected to the release passage C and its discharge side connected to the discharge hydraulic passage D. The pump 45 is driven by a motor M to suction brake fluid from the release passage C and brake fluid directly from the reservoir tank 15 via the pipe Hf as a communication passage connected to the release passage C, and to discharge the pressurized brake fluid to the wheel hydraulic passage B via the discharge hydraulic passage D. The pump 45 is driven in a limited manner under control of the control device 9 during normal brake control and in the event that the slave cylinder 30 has failed, to supplementarily pressurize the brake fluid passage of the wheel hydraulic passage B. In other words, the pump 45 is not driven during anti-lock brake control or automatic brake control. Note that an amount of brake fluid discharged by the pump 45 depends on the rotation speed of the motor M.

The control device 9 is attached to a side of the base 1C, for example, and contains a control board in a housing. The control device 9 controls operation of the pump 45 (motor M) and opening and closing of the valves, based on information obtained from various sensors, programs stored in advance, and the like. The control device 9 is a dedicated control device for the hydraulic pressure controller 2. The control device 9 also has a brake assist function to drive the pump 45 to supplementarily pressurize brake fluid acting on the wheel brakes, during normal brake control and backup control due to a failure of the slave cylinder 30. In this case, the pump 45 suctions brake fluid directly from the reservoir tank 15 via the pipe Hf and release passage C. When executing supplementary pressurization operation, the control device 9 sets the valve opening pressure of the regulator R (cut valve 41) to a target pressure and controls driving the pump 45.

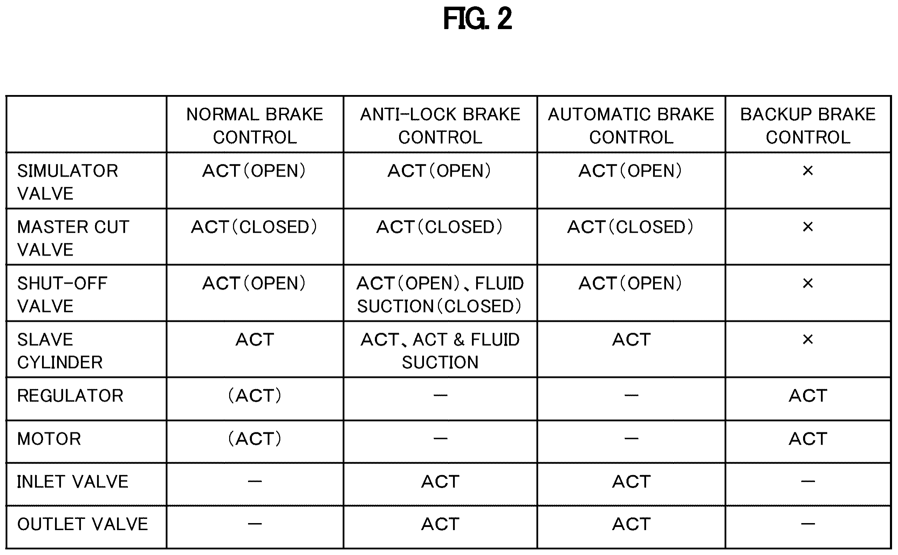

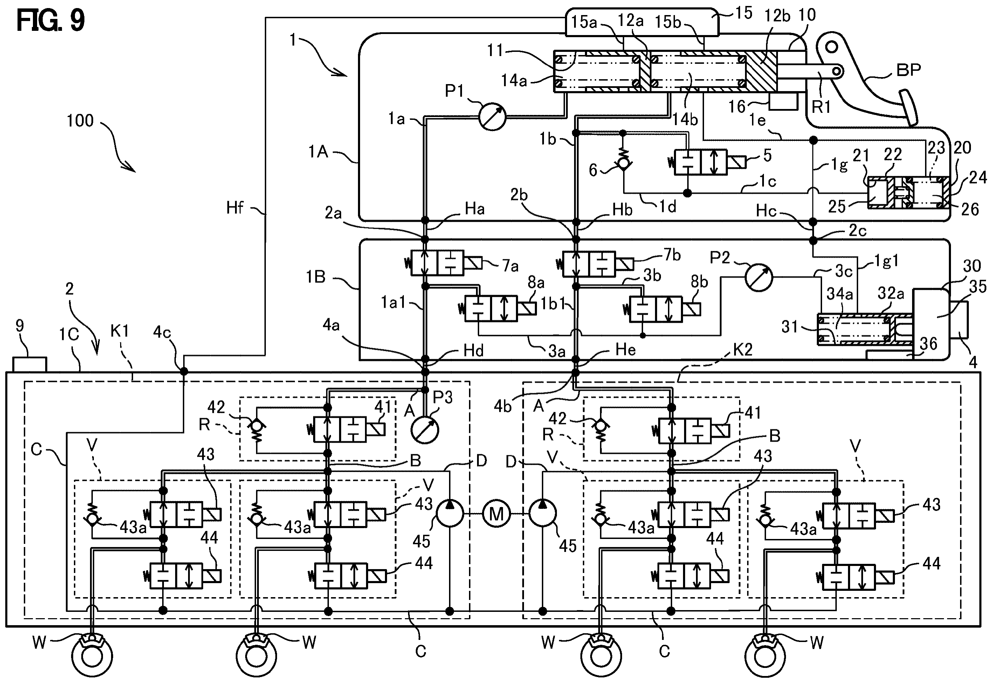

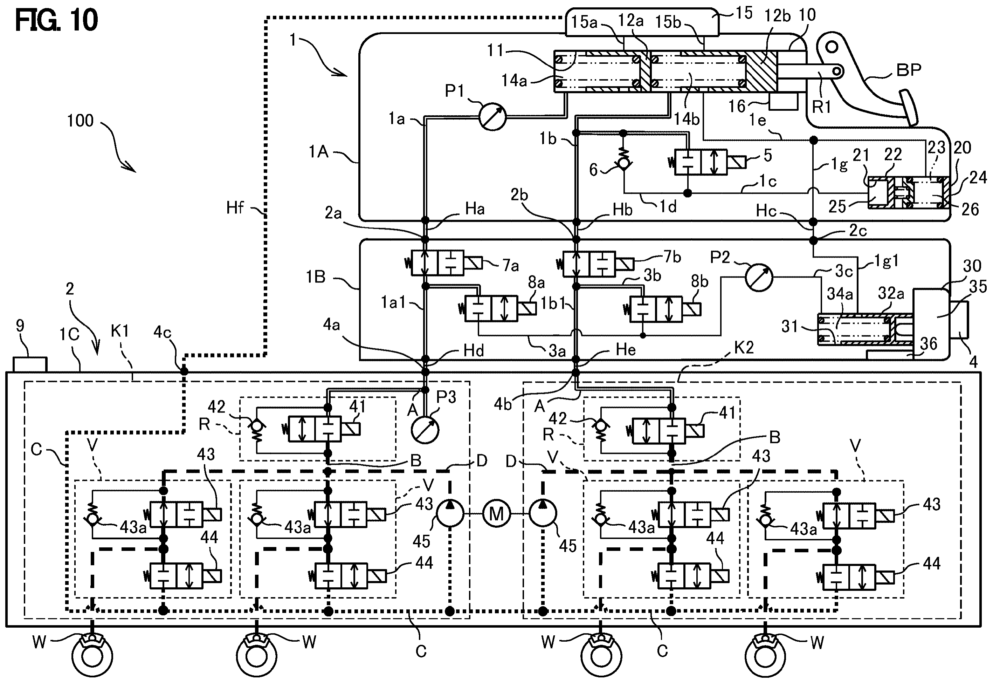

Next, operation of the vehicle brake system 100 is described with reference to FIGS. 2 to 10. In FIG. 2, the term "ACT" in the chart indicates the corresponding component acting (in action), and "(OPEN)" or "(CLOSED)" following the term "ACT" indicates the corresponding valve having been open or closed. The term "SUCTION" indicates that the fluid suction operation may be executed. The mark "-" in the chart indicates the corresponding component not acting. The mark "x" in the chart indicates the corresponding component not acting in the event of a failure. The vehicle brake system 100 in FIG. 1, when started, has the first master cut valve 7a and second master cut valve 7b of the hydraulic pressure generator 1 magnetized to act (ACT) to close the valves. Additionally, the first shut-off valve 8a and second shut-off valve 8b are magnetized to act (ACT) to open the valves.

This causes the downstream side of the first main hydraulic passage 1a1 to be in fluid communication with the first communication passage 3a, and the downstream side of the second main hydraulic passage 1b1 to be in fluid communication with the second communication passage 3b. As a result, the master cylinder 10 is shut off from the wheel cylinders W, and the slave cylinder 30 is in fluid communication with the wheel cylinders W. In addition, when the system is started, the simulator valve 5 in the first branch hydraulic passage 1c of the hydraulic pressure generator 1 is opened. In the following description, bold outlined double lines in the drawings of the hydraulic circuits indicate hydraulic passages having the brake hydraulic pressure generated by the master cylinder 10 acting thereon, and bold solid lines indicate hydraulic passages having the brake hydraulic pressure generated by the slave cylinder 30 acting thereon. Additionally, bold dashed lines indicate fluid passages having the brake hydraulic pressure discharged from the pump 45 acting thereon, and dashed lines thinner and spaced closer than the bold dashed lines indicate fluid passages of the brake fluid released from the wheel cylinder W when the fluid is depressurized, fluid passages of the brake fluid suctioned by the pump 45, and fluid passages of the brake fluid suctioned into the slave cylinder 30.

### (Normal Brake Control)

FIG. 3 illustrates a flow of brake fluid during normal brake control. With normal brake control when there is no possibility of the wheels locking, when the brake pedal BP is depressed, the amount of depression is detected by the stroke sensor 16 and the electric motor 36 of the slave cylinder 30 is driven by the control device 4. This causes the slave cylinder 30 to generate brake hydraulic pressure. In addition, the brake hydraulic pressure generated by the master cylinder 10 through operation of the brake pedal BP is not transmitted to the wheel cylinders W, but is transmitted to the stroke simulator 20 via the second main hydraulic passage 1b and first branch hydraulic passage 1c. Then, the brake hydraulic pressure in the pressure chamber 25 of the stroke simulator 20 increases to move the piston 22 against a biasing force of the coil spring 23, to accept a stroke of the brake pedal BP. This causes a pseudo reaction force to be applied to the brake pedal BP.

The control device 4 compares the brake hydraulic pressure generated by the slave cylinder 30 (the hydraulic pressure detected by the second pressure sensor P2) with the required hydraulic pressure (the first pressure sensor P1) for the amount of operation of the brake pedal BP. Then, the control device 4 controls the rotation speed and/or drive time of the electric motor 36, and the like, based on the result of the comparison. The brake hydraulic pressure increased for the amount of operation of the brake pedal BP in this manner is inputted to the hydraulic pressure controller 2 via the common communication passage 3c, first communication passage 3a, second communication passage 3b, first main hydraulic passage 1a1, and second main hydraulic passage 1b1.

The brake hydraulic pressure inputted to the hydraulic pressure controller 2 is propagated via the regulator R in the outlet hydraulic passage A to the wheel hydraulic passage B, and is transmitted, as it is, to the wheel cylinder W via the inlet valve 43. This causes the wheels (not shown) to be braked.

The control device 4 also compares the brake hydraulic pressure generated by the slave cylinder 30 (the hydraulic pressure detected by the second pressure sensor P2) with the required hydraulic pressure for the amount of operation of the brake pedal BP. If the comparison result indicates that the brake hydraulic pressure needs to be increased to a high hydraulic pressure range such as with sudden braking, the control device 4 executes supplementary pressurization operation to cause the pump 45 to be driven to increase brake hydraulic pressure in the wheel hydraulic passage B.

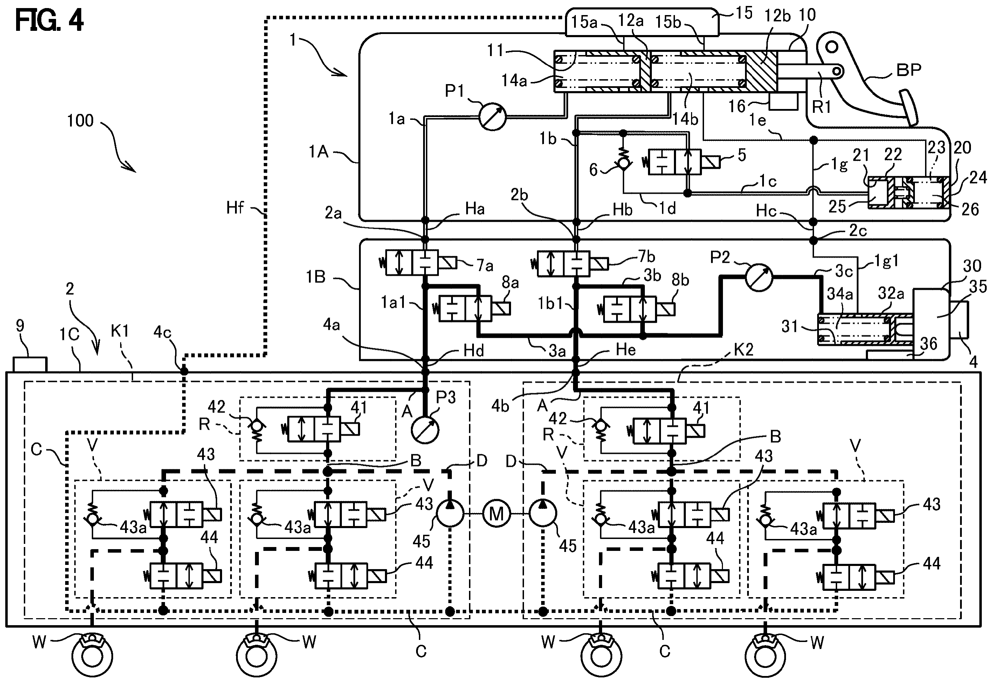

With the supplementary pressurization operation, the regulator R is magnetized under control of the control device 9 to act (ACT) to close the regulator R, as shown in Fig. 4. In addition, the pump 45 is driven by the motor M, to have brake fluid, which has been suctioned from the release passage C, pressurized by the pump 45 and discharged from the discharge hydraulic passage D to the wheel hydraulic passage B. This causes the brake hydraulic pressure, for a high hydraulic pressure range such as with sudden braking, to be transmitted to the wheel cylinder W via the inlet valve 43. Note that the drive currents of the regulator R and motor M can be suitably set based on the required hydraulic pressure for the amount of operation of the brake pedal BP.

Note that when the brake pedal BP is released from being depressed, the electric motor 36 of the slave cylinder 30 is driven in the reverse direction under control of the control device 9. This causes the hydraulic pressure generated by the slave cylinder 30 to decrease, and causes the pressure chamber 34a of the slave cylinder 30 to have negative pressure. As a result, the brake fluid having been transmitted to the wheel cylinder W is returned to the slave cylinder 30 via the wheel hydraulic passage B, outlet hydraulic passage A, first main hydraulic passage 1a1, second main hydraulic passage 1b1, first communication passage 3a, second communication passage 3b, and common communication passage 3c. This return of brake fluid preliminarily secures brake fluid in preparation for subsequent pressurization.

### (Anti-lock Brake Control)

Anti-lock brake control is executed when the wheels are about to lock, and is implemented by suitably selecting from among a mode of decreasing, increasing, or maintaining constant the brake hydraulic pressure acting on the wheel cylinder W. The control device 9 determines which one is to be selected from among the mode of decreasing, increasing, or maintaining pressure, based on the wheel speed obtained from a wheel speed sensor (not shown).

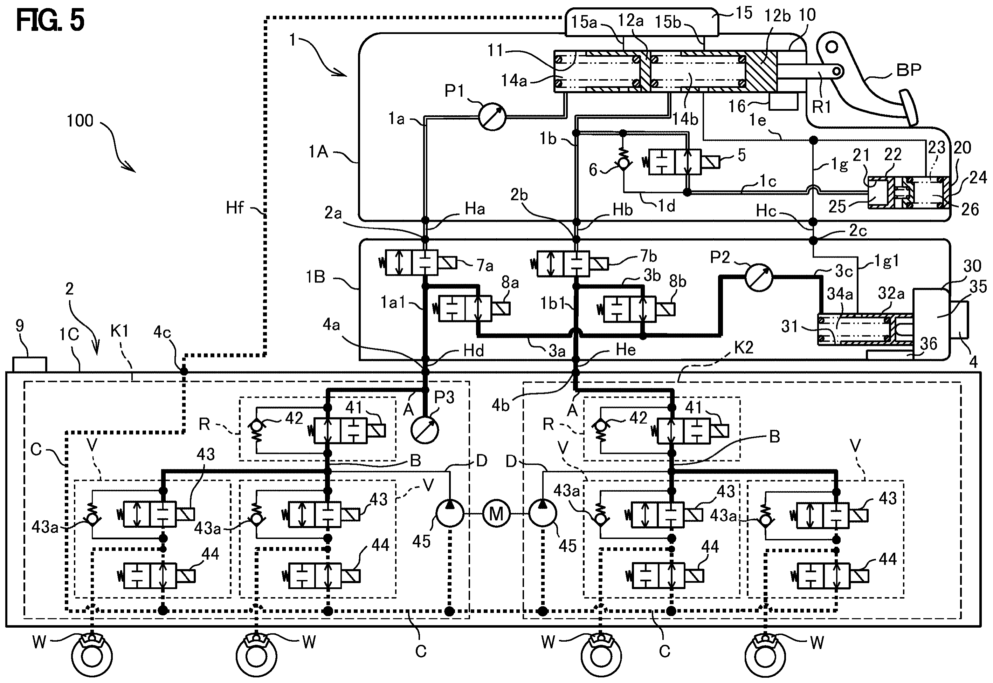

During the brake pedal BP being depressed, that is, when the brake hydraulic pressure generated by the slave cylinder 30 is acting on the hydraulic pressure controller 2, the control device 9 starts anti-lock brake control if the wheels are about to lock. When the mode of decreasing pressure is selected during the anti-lock brake control, the control device 9 causes the inlet valve 43 and outlet valve 44 to be magnetized, as shown in FIG. 5. This causes the inlet valve 43 to stay closed and causes the outlet valve 44 to stay open. Accordingly, the brake fluid in the wheel hydraulic passage B leading to the wheel cylinder W is released from the outlet valve 44 to the release passage C. This decreases brake hydraulic pressure acting on the wheel cylinder W. The brake fluid released to the release passage C is returned directly to the reservoir tank 15 via the pipe Hc.

Alternatively, when the mode of increasing pressure is selected during antilock brake control, the control device 9 causes the inlet valve 43 and outlet valve 44 to be demagnetized. This causes the inlet valve 43 to stay open and causes the outlet valve44 to stay closed. This increases brake hydraulic pressure acting on the wheel cylinder W via the wheel hydraulic pressure passage B due to the brake hydraulic pressure generated by the slave cylinder 30.

Still alternatively, when the mode of maintaining pressure is selected during antilock brake control, the control device 9 causes the inlet valve 43 to be magnetized and causes the outlet valve 44 to be demagnetized. This causes the inlet valve 43 to stay closed and causes the outlet valve 44 to stay closed. Accordingly, brake fluid is trapped in a flow passage blocked with the inlet valve 43, outlet valve 44, and wheel cylinder W. As a result, the brake hydraulic pressure acting on the wheel cylinder W is maintained constant.

### (Fluid Suction Operation during Anti-lock Brake Control)

Fluid suction operation is operation for suctioning brake fluid from the reservoir tank 15 in order to secure brake fluid in the pressure chamber 34a of the slave cylinder 30. Note that the pressure chamber 34a secures an amount of brake fluid required during normal brake control (during brake control with the first shut-off valve 8a and second shut-off valve 8b staying open), except during special braking, such as sudden braking, or when anti-lock brake control continues frequently.

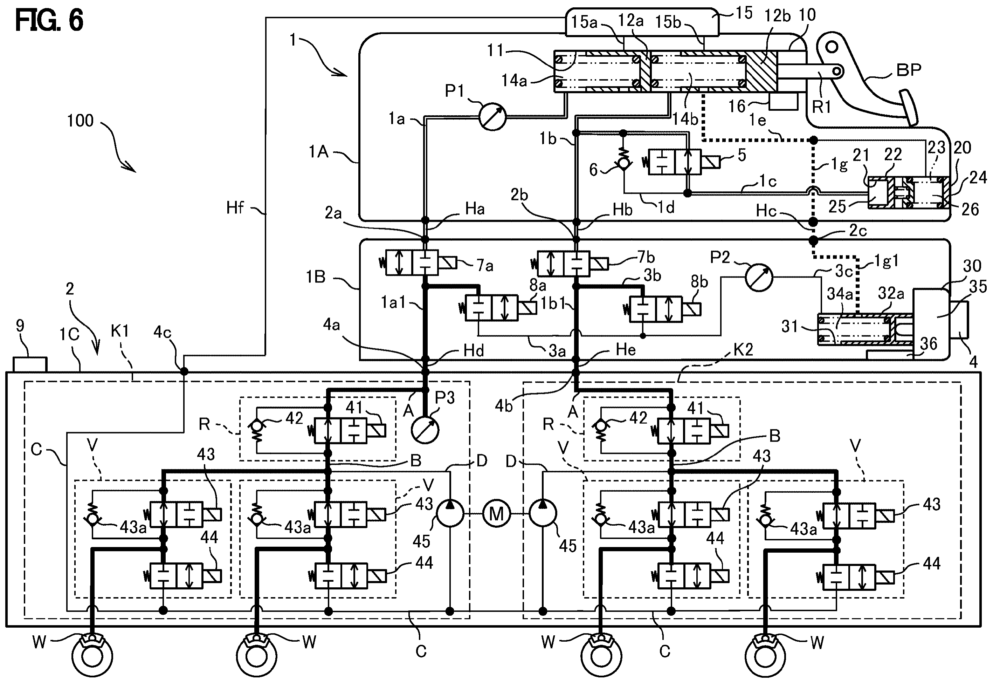

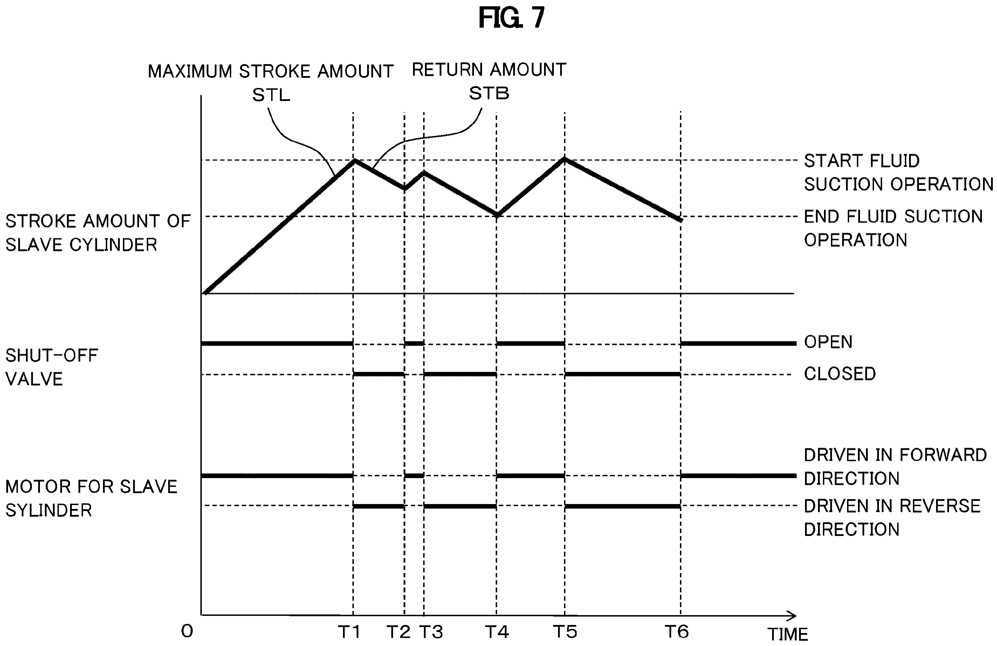

Next, the flow of brake fluid with fluid suction operation and the timing of fluid suction operation are described with reference to time charts in FIGS. 6 and 7. The time chart in FIG. 7 indicates fluid suction operation when the control device 4 has determined that the required hydraulic pressure for the amount of operation of the brake pedal BP cannot be replenished with a maximum stroke amount STL of the slave piston 32a of the slave cylinder 30. The maximum stroke amount STL can be set as a travel distance when the slave piston 32a has moved from an initial position to a position immediately before contacting a bottom in the third cylinder bore 31, such as when the fluid is pressurized.

When it has been determined that the hydraulic pressure required by the driver cannot be replenished with the maximum stroke amount STL, the slave piston 32a is temporarily returned in a direction of decreasing pressure to re-pressurize the fluid so as to pressurize the fluid with an amount exceeding the maximum stroke amount STL. A return amount STB at this time can be calculated, based on a map (not shown), for example.

In particular, when the brake pedal BP has been depressed at time 0 and a stroke amount of the slave piston 32a has reached the maximum stroke amount STL at time T1, fluid suction operation is started to cause the control device 4 to control the first shut-off valve 8a and second shut-off valve 8b to stay closed. The control device 4 then controls driving the electric motor 36 in a reverse direction of decreasing pressure (return direction) for the return amount STB. Accordingly, the slave piston 32a is returned in the direction of decreasing pressure, to depressurize the pressure chamber 34a to have a negative pressure, while the hydraulic pressure in the wheel cylinders W is maintained. This causes the brake fluid to be suctioned from the reservoir tank 15 via the reservoir tank communication passage 1e, supply passage A, and slave cylinder supply passage 1g1 into the slave cylinder 30. In this case, the amount of suctioned brake fluid is based on the return amount STB, and is an amount large enough to complement the pressurization.

When the returning for the return amount STB completes at time T2, the control device 4 controls the first shut-off valve 8a and second shut-off valve 8b staying open. Then, the control device 4 drives the electric motor 36 again in the forward direction of increasing pressure for the remaining stroke amount. This increases the brake hydraulic pressure to the wheel cylinder W again, to have the brake hydraulic pressure required by the driver at time T3.

When the brake pedal BP is released later from being depressed, the control device 4 controls the first shut-off valve 8a and second shut-off valve 8b staying closed to end the fluid suction operation and controls driving the electric motor 36 in the reverse direction (return direction) of decreasing pressure. This causes the brake fluid to be suctioned from the reservoir tank 15 via the reservoir tank communication passage 1e, supply passage 1g, and slave cylinder supply passage 1g1 into the slave cylinder 30, and the fluid suction operation ends at time T4.

In contrast, when it is determined that the hydraulic pressure required by the driver can be replenished with the maximum stroke amount STL (time T4), the electric motor 36 is driven in forward rotation within the range of the maximum stroke amount STL, without any consideration on the return amount STB. FIG. 7 shows a case where the electric motor 36 is driven in forward rotation up to the maximum stroke amount STL (time T5). Even in this case, when the brake pedal BP is released from being depressed, the control device 4 controls the first shut-off valve 8a and second shut-off valve 8b staying closed, and controls driving the electric motor 36 in the reverse direction (return direction) of decreasing pressure, so that the brake fluid is supplied to the slave cylinder 30 to end the fluid suction operation (time T6).

### (Automatic Brake Control)

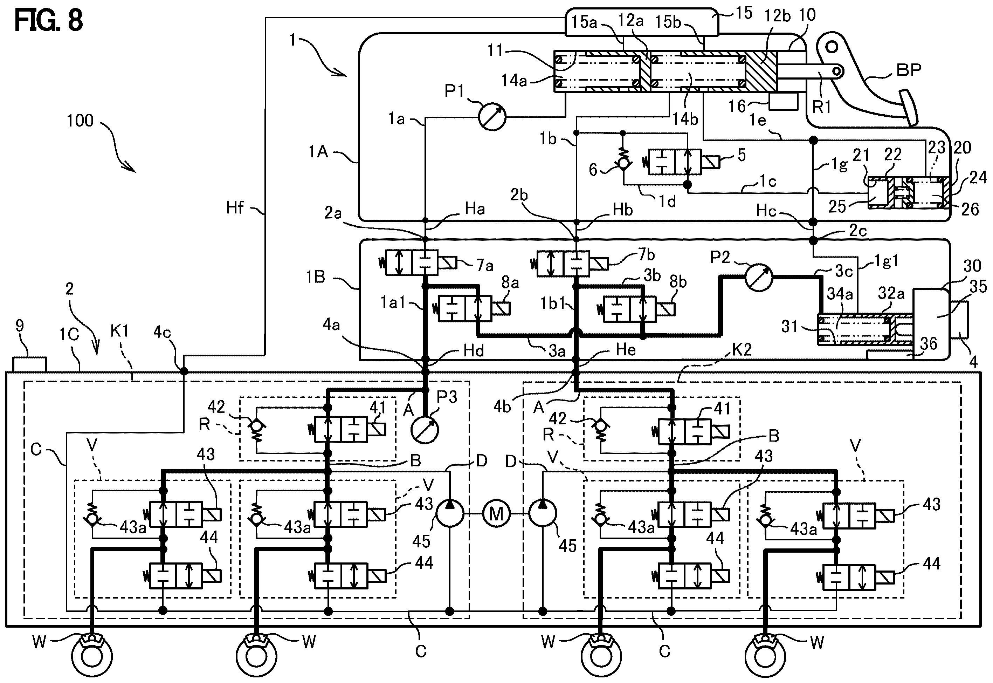

When the control device 4 has determined that the wheels should be braked while the driver is not depressing the brake pedal BP, automatic brake control is executed to assist in stabilizing the behavior of the vehicle. As shown in FIG. 8, automatic brake control causes the slave cylinder 30 to be driven under control of the control device 4, as with normal brake control, and causes the first shut-off valve 8a and second shut-off valve 8b to stay open, to transmit the brake hydraulic pressure generated by the slave cylinder 30 to the hydraulic pressure controller 2.

In the hydraulic pressure controller 2, the control device 9 demagnetizes the regulator R to stay open, demagnetizes the inlet valve 43 to stay open, and demagnetizes the outlet valve 44 to stay closed. This causes the brake hydraulic pressure generated by the slave cylinder 30 to be transmitted from the outlet hydraulic passage A of the hydraulic pressure controller 2 via the wheel hydraulic passage B to the wheel cylinders W, to brake the wheels. Note that the brake hydraulic pressure acting on the wheel cylinders W can be released from the outlet valve 44 to the release passage C, with the inlet valve 43 excited to stay closed and the outlet valve 44 excited to stay open. Even in this case, the brake fluid released to the release passage C is returned from the release passage C via the pipe Hf to the reservoir tank 15.

### (Back-up Brake Control)

Backup brake control is a control executed as a backup mode to cause the brake hydraulic pressure generated by the master cylinder 10 to act directly on the wheel cylinders W in the event that the slave cylinder 30 has failed (in the event that the hydraulic pressure generator 1 has failed). The backup brake control uses the pump 45 of the hydraulic pressure controller 2 to assist in braking through supplementary pressurization to increase brake hydraulic pressure in the wheel hydraulic passage B.

With the backup brake control, components of the hydraulic pressure generator 1 and hydraulic pressure controller 2 are temporarily set to states before the system is started. This causes the first master cut valve 7a and second master cut valve 7b to stay open to allow the upstream side and downstream side of the first main hydraulic passage 1a1 to be in fluid communication with each other, and causes the upstream side and downstream side of the second main hydraulic passage 1b1 to be in fluid communication with each other. In addition, the simulator valve is closed to shut off the master cylinder 10 from the stroke simulator 20. Further, the hydraulic pressure controller 2 has the regulator R and inlet valve 43 staying open, and has the outlet valve 44 staying closed.

Accordingly, when the brake pedal BP has been depressed, the brake hydraulic pressure generated by the master cylinder 10 is transmitted via the first main hydraulic passages 1a, 1a1 and second main hydraulic passages 1b, 1b1 to the hydraulic pressure controller 2. This causes the brake hydraulic pressure to be directly transmitted to the wheel cylinders W via the outlet hydraulic passage A and wheel hydraulic passage B.

The supplementary pressurization operation causes the regulator R to be excited under control of the control device 9 to act (ACT) to close the regulator R. In addition, the pump 45 is driven by the motor M to cause the brake fluid suctioned from the release passage C to be pressurized by the pump 45 and discharged from the discharge hydraulic passage D to the wheel hydraulic passage B. This causes the brake hydraulic pressure acting on the wheel cylinders W to be increased.

During supplementary pressurization operation, the hydraulic pressure required by the driver is detected by the third hydraulic pressure sensor P3. The control device 9 drives the pump 45 for a predetermined time, such as with a control program preset in the control device 9 based on characteristics of the vehicle model or the like, so that the brake hydraulic pressure is increased to the required hydraulic pressure.

Note that if there is an abnormality in the hydraulic pressure in either the brake output system K1 or brake output system K2 during normal brake control described above, the control device 4 can control the first shut-off valve 8a or second shut-off valve 8b of the system having the abnormality to close. In this case, the control device 4 controls the first shut-off valve 8a or second shut-off valve 8b of the normally working system to open. For example, the control device 4 can determine an abnormality based on values of the second pressure sensor P2 detected when the slave cylinder 30 is driven with one of the first shut-off valve 8a and second shut-off valve 8b closed, with the other of the two closed, and with both of the two closed.

According to the vehicle brake system 100 of the present embodiment as described above, the brake fluid can be suctioned directly from the reservoir tank 15 when the pump 45 is operated. Additionally, the brake fluid released from the wheel cylinders W of the wheel brakes can be returned directly to the reservoir tank 15 via the release passage C. This eliminates the need of providing a suction valve upstream of the pump 45, and also eliminates the need of separately providing a reservoir to store the brake fluid released from the wheel cylinders W. Accordingly, the parts of the vehicle brake system 100 can be reduced in number, and thus costs can be reduced. In addition, as no suction valve is provided upstream of the pump 45, no resistance is generated when the brake fluid passes through such a suction valve. This improves performance in increasing brake hydraulic pressure acting on the wheel brakes. Accordingly, there is no need of using the high-performance motor M to drive the pump 45, to allow for reducing the components of the system in size.

Further, as the supply unit capable of storing the brake fluid is the reservoir tank 15 to supply the brake fluid to the slave cylinder 30, the brake fluid can smoothly flow within the system.

Still further, as the reservoir tank 15 is connected, and capable of supplying the brake fluid, to the master cylinder 10, the brake fluid can be supplied from the single reservoir tank 15 to the slave cylinder 30 via the master cylinder 10, to allow for reducing the parts of the system in number.

Still further, the connection between the master cylinder 10 and slave cylinder 30 can be switched by the first master cut valve 7a and second master cut valve 7b, and fluid communication from the slave cylinder 30 can be cut off by the first shut-off valve 8a and second shut-off valve 8b. This allows the brake hydraulic pressure acting on the wheel cylinders W of the wheel brakes to be set to various modes, without any complex configuration, to control the hydraulic pressure efficiently so as to be suitably adapted to system conditions and vehicle conditions. As the hydraulic pressure can be controlled efficiently without any complex configuration, the system can be prevented from increasing in size.

Still further, as the slave cylinder 30 increases brake hydraulic pressure during normal brake control, anti-lock brake control, and automatic brake control, the pressure can be increased with good response. Besides, there is an advantage that an operation noise is less than a case of increasing pressure by way of driving the pump 45.

Still further, as the brake hydraulic pressure can be increased by the pump 45 in addition to the pressure being increased by the slave cylinder 30, the brake hydraulic pressure can be increased by the pump 45 when there is a need of further increasing the pressure, while normal brake control is being executed with the pressure being increased by the slave cylinder 30. This allows for obtaining sufficient performance in increasing pressure without increasing performance of the slave cylinder 30, in increasing pressure, more than necessary. This contributes to reducing the slave cylinder 30 in size. Still further, as the pump 45 can be driven to supplementarily pressurize the wheel hydraulic passage B in the event that the slave cylinder 30 has failed, braking is assisted with brake hydraulic pressure being increased even in the event that the slave cylinder 30 has failed, to have excellent performance in increasing pressure in the event of a failure.

Still further, the frequency of the pump 45 being driven decreases to improve durability of the pump 45. Further, the pump 45 is driven only in a limited manner, and the brake fluid released from the wheel cylinders W due to decreased pressure, during anti-lock brake control, is returned directly to the reservoir tank 15 without being suctioned by the pump 45. Thus, there is no possibility of excessive pressurization by the pump 45.

Still further, during normal brake control, the control device 4 controls driving the pump 45 of the slave cylinder 30 for the amount of operation of the brake pedal BP being operated, and switches the first master cut valve 7a and second master cut valve 7b so that the brake hydraulic pressure from the slave cylinder 30 is applied to the hydraulic pressure controller 2. Additionally, the control device 4 opens the first shut-off valve 8a and second shut-off valve 8b. This allows for increasing brake hydraulic pressure by the slave cylinder 30, during normal brake control, to implement brake control for the amount of the brake pedal BP being operated, with good response in increasing pressure.

Still further, the first shut-off valve 8a and second shut-off valve 8b are closed and the slave piston 32a is driven in a direction of decreasing the pressure, when brake fluid is suctioned during antilock brake control, to execute fluid suction operation. When the slave piston 32a is driven in the direction of decreasing the pressure, the hydraulic chamber 34a of the slave cylinder 30 has negative pressure to suction brake fluid from the reservoir tank 15 into the slave cylinder 30. This fluid suction operation allows the pressure chamber 34a to be replenished with brake fluid for repressurization, to suitably secure the brake fluid required for increasing the pressure. This provides a brake system that can suitably increase hydraulic pressure to a high hydraulic pressure range, while preventing the slave cylinder 30 from increasing in size. Besides, the brake fluid released to the release passage C due to decreased pressure in the wheel brakes is returned to the reservoir tank 15 via a through passage, to allow for suitably secure the brake fluid required for fluid suction operation.

Still further, the brake hydraulic pressure generated from the single pressure chamber 34a of the slave cylinder 30 is transmitted to the wheel cylinders W of the different wheel brakes from each other, when the brake pedal BP is operated while the first master cut valve 7a and second master cut valve 7b staying open. This provides the vehicle brake system 100 that can be suitably applied to a hydraulic circuit with multiple wheel brakes.

### (Second Embodiment)

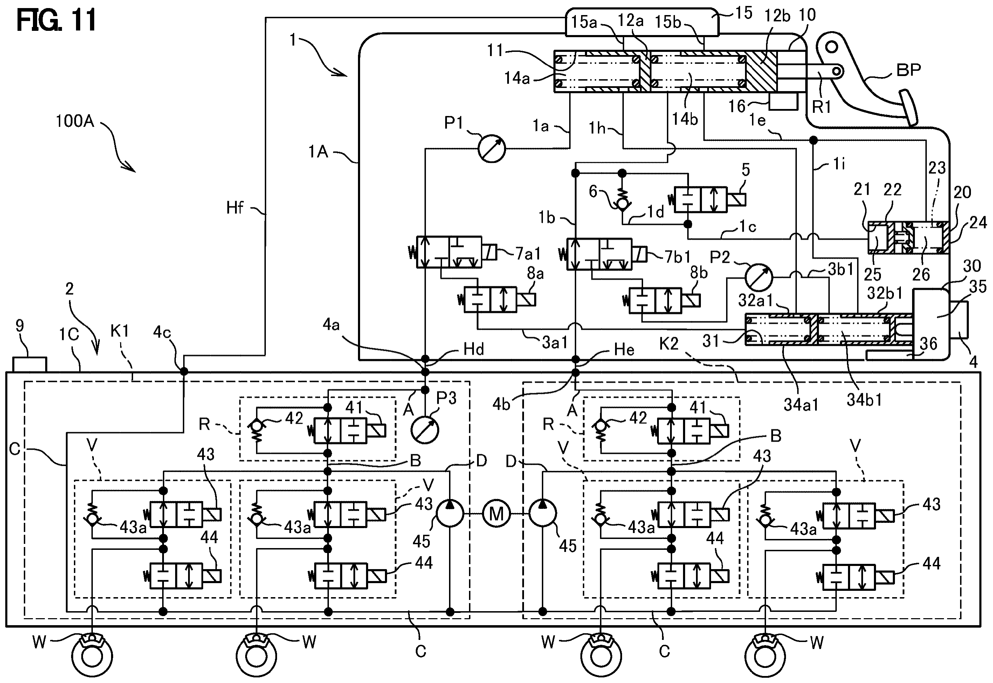

A vehicle brake system according to a second embodiment is described with reference to FIG. 11. The present embodiment differs from the first embodiment on the point that three-way valves are used as the first master cut valve 7a and second master cut valve 7b, and that the slave cylinder 30 with two hydraulic chambers is used.

As shown in FIG. 11, a vehicle brake system 100A is composed of two bases (three blocks) consisting of the base 1A in which the components of the hydraulic pressure generator 1 are installed and the base 1C in which the components of the hydraulic pressure controller 2 are installed. The hydraulic pressure generator 1 includes the master cylinder 10, stroke simulator 20, and slave cylinder 30.

The slave cylinder 30 includes two slave pistons 32a1 and 32b1 inserted into the third cylinder bore 31 in the base 1A. The third cylinder bore 31 is divided into a bottom-end pressure chamber 34a1 and an open-end pressure chamber 34b1. The bottom-end pressure chamber 34a1 is defined between the bottom surface in the third cylinder bore 31 and the slave piston 32a1 at a bottom end. The open-end pressure chamber 34b1 is defined between the slave piston 32a1 at the bottom end and the slave piston 32b1 at an open end. Both of the slave pistons 32a1 and 32b1 slide in the third cylinder bore 31 upon receiving input from the rod 35a, to pressurize the brake fluid in the bottom-end pressure chamber 34a1 and open-end pressure chamber 34b1.

The bottom-end pressure chamber 34a1 has a first slave cylinder supply passage 1h connected thereto. The first slave cylinder supply passage 1h is in fluid communication with the reservoir tank 15 via the master cylinder 10 and supply port 15a. Additionally, the bottom-end pressure chamber 34a1 has a first communication passage 3a1, which is in fluid communication with the first main hydraulic passage 1a, connected thereto. The first communication passage 3a1 is provided with the first shut-off valve 8a.

The open-end pressure chamber 34b1 has a second slave cylinder supply passage 1i connected thereto. The second slave cylinder supply passage 1i branches off from the reservoir tank communication passage 1e and is in fluid communication with the reservoir tank 15 via the reservoir tank communication passage 1e. Additionally, the open-end pressure chamber 34b1 has the second communication passage 3b1, which leads to the second main hydraulic passage 1b, connected thereto. The second communication passage 3b1 is provided with the second shut-off valve 8b and second pressure sensor P2.

A first master cut valve 7a1 as a master cut valve is provided at a connection between the first main hydraulic passage 1a and first communication passage 3a1. The first master cut valve 7a1 is a two-position, three-port solenoid valve. When the first master cut valve 7a1 is in a first position shown in FIG. 11, the upstream side (toward the master cylinder 10) and downstream side (toward the hydraulic pressure controller 2) of the first main hydraulic passage 1a are in fluid communication with each other, and the first main hydraulic passage 1a and first communication passage 3a1 are shut off from each other. In contrast, when the first master cut valve 7a1 is in a second position, the upstream side and downstream side of the first main hydraulic passage 1a are shut off from each other, and the first communication passage 3a1 and the downstream side of the first main hydraulic passage 1a are in fluid communication with each other.

A second master cut valve 7b1 as a master cut valve is provided at a connection between the second main hydraulic passage 1b and second communication passage 3b1. The second master cut valve 7b1 is a two-position, three-port solenoid valve. When the second master cut valve 7b1 is in a first position shown in FIG. 11, the upstream side (toward the master cylinder 10) and downstream side (toward the hydraulic pressure controller 2) of the second main hydraulic passage 1b are in fluid communication with each other, and the second main hydraulic passage 1b and second communication passage 3b1 are shut off from each other. In contrast, when the second master cut valve 7b1 is in a second position, the upstream side and downstream side of the second main hydraulic passage 1b are shut off from each other, and the second communication passage 3b1 and the downstream side of the second main hydraulic passage 1b are in fluid communication with each other.

According to the vehicle brake system 100A of the present embodiment as described above, the same effects as those of the first embodiment are obtained. That is, when the pump 45 is operated, brake fluid is suctioned directly from the reservoir tank 15, and the brake fluid released from the wheel cylinders W of the wheel brakes are returned directly to the reservoir tank 15 via the release passage C. This eliminates the need of providing a suction valve upstream of the pump 45, and also eliminates the need of separately providing a reservoir for storing the brake fluid released from the wheel cylinders W. Accordingly, parts of the vehicle brake system 100 can be reduced in number, to reduce costs. In addition, as no intake valve is provided upstream of the pump 45, no resistance is generated when the brake fluid passes through such an intake valve. This improves performance in increasing brake hydraulic pressure acting on the wheel brakes.

Hereinabove, the embodiments of the present invention have been described, but the present invention is not limited to the above-described embodiments and can be modified as appropriate without departing from the spirit of the present invention. For example, the first and second embodiments each include the master cylinder 10 having two of the bottom-end pressure chamber 14a and open-end pressure chamber 14b, but the present invention is not limited thereto and may have a single pressure chamber.

In addition, the first embodiment has the three bases 1A, 1B, and 1C to configure the hydraulic pressure generator 1 and hydraulic pressure controller 2d, but the present invention is not limited thereto and may have the bases 1A and 1B consolidated as a single base to configure the hydraulic pressure generator 1. Alternatively, the hydraulic pressure generator 1 and hydraulic pressure controller 2 may be integrated into a single base.

Further, the first and second embodiments each include the two control devices 4 and 9, but the present invention is not limited thereto and may have a single control device controlling the hydraulic pressure generator 1 and hydraulic pressure controller 2.

Furthermore, the embodiments each include the reservoir tank 15 as the supply unit, but the present invention is not limited thereto and may have a fluid passage capable of storing brake fluid, such as the release passage C and pipe Hf, provided or even a reservoir capable of storing brake fluid provided in the release passage C and/or pipe Hf, as the supply unit for supplying brake fluid to the slave cylinder 30. Alternatively, a tank for supplying brake fluid to the master cylinder 10 and a tank for supplying brake fluid to the slave cylinder 30 may be provided individually, and a master tank capable of supplying brake fluid to these two tanks may be provided upstream of the two tanks and configured as the supply unit.

### LIST OF REFERENCE SIGNS

1: hydraulic pressure generator, 1a; 1a1: first main hydraulic passage, 1b; 1b1: second main hydraulic passage, 2: hydraulic pressure controller, 3a; 3a1: first communication passage (communication passage), 3b; 3b1: second communication passage (communication passage), 3c: common communication passage (communication passage), 7a; 7a1: first master cut valve (master cut valve), 7b; 7b1: second master cut valve (master cut valve), 8a: first shut-off valve (shut-off valve), 8b: second shut-off valve (shut-off valve), 10: master cylinder, 15: reservoir tank (supply unit), 30: slave cylinder, 36: electric motor (electric actuator), 43: inlet valve, 44: outlet valve, 45: pump, A: outlet hydraulic passage, B: wheel hydraulic passage, C: release passage, Hf: pipe (through passage), R: regulator (pressure regulating valve), V: valve controller, and 100; 100A: vehicle brake system.

## Claims

1. A vehicle brake system comprising:
a hydraulic pressure generator having a slave cylinder driven by an electric actuator to generate brake hydraulic pressure; and
a hydraulic pressure controller to use the brake hydraulic pressure from the hydraulic pressure generator to control brake hydraulic pressure acting on wheel brakes,
wherein the hydraulic pressure controller includes:
a pressure regulating valve provided in a hydraulic passage leading to the wheel brakes and configured to regulate a difference in brake hydraulic pressure between the hydraulic pressure generator and the wheel brakes;
a release passage into which brake fluid released from the wheel brakes flows;
a pump configured to suction brake fluid in the release passage and discharge brake fluid to the hydraulic passage; and
a supply unit provided upstream of the slave cylinder and configured to supply brake fluid to the slave cylinder,
wherein the release passage leads to the supply unit.

2. The vehicle brake system according to claim 1, wherein
the supply unit is a reservoir tank to supply brake fluid to the slave cylinder.

3. The vehicle brake system according to claim 2, wherein
the hydraulic pressure generator includes a master cylinder to generate brake hydraulic pressure for an amount of a brake operator being operated, and
the reservoir tank is connected to the master cylinder so as to supply brake fluid to the master cylinder.

4. The vehicle brake system according to claim 1, wherein
the hydraulic pressure generator includes:
a master cylinder connected to the supply unit and configured to generate brake hydraulic pressure for an amount of the brake operator being operated;
a main hydraulic passage leading from the master cylinder to the hydraulic pressure controller;
a master cut valve provided in the main hydraulic passage and configured to switch between a mode of brake hydraulic pressure from the master cylinder being applied to the hydraulic pressure controller and a mode of brake hydraulic pressure from the slave cylinder being applied to the hydraulic pressure controller;
a communication passage leading from the slave cylinder to the main hydraulic passage; and
a shut-off valve to open and close the communication passage, and
the hydraulic pressure controller includes, as the hydraulic passage, an outlet hydraulic passage connected to the main hydraulic passage and a wheel hydraulic passage leading to the wheel brake,
wherein the pressure regulating valve can regulate a difference in brake hydraulic pressure between the outlet hydraulic passage and the wheel hydraulic passage, and
the pump suctions brake fluid in the release passage and discharges brake fluid to the wheel hydraulic passage.

5. The vehicle brake system according to claim 4, wherein
the slave cylinder operates during normal brake control when there is no possibility of the wheel brakes locking, during anti-lock brake control, and during automatic brake control to assist in stabilizing the behavior of a vehicle, to increase hydraulic pressure in the main hydraulic passage on a side of the master cut valve toward the hydraulic pressure controller.

6. The vehicle brake system according to claim 4, wherein
the pump suctions brake fluid directly from the supply unit via the release passage, only during normal brake control when there is no possibility of the wheel brakes locking and in the event that the slave cylinder has failed, to supplementarily pressurize the wheel hydraulic passage.

7. The vehicle brake system according to claim 4, further comprising:
a control device to control the hydraulic pressure generator and hydraulic pressure controller,
wherein during normal brake control when there is no possibility of the wheel brakes locking,
the control device controls driving the electric actuator for the amount of the brake operator being operated, switches the master cut valve so that brake hydraulic pressure from the slave cylinder is applied to the hydraulic pressure controller, and opens the shut-off valve.

8. The vehicle brake system according to claim 7, wherein
when the wheel hydraulic passage needs to be supplementarily pressurized, during the normal brake control, the control device sets valve opening pressure of the pressure regulating valve to a target pressure and controls driving the pump.

9. The vehicle brake system according to claim 4, further comprising:
a control device to control the hydraulic pressure generator and hydraulic pressure controller, and
a valve controller to switch between fluid communication and shut-off of a fluid passage leading from the wheel hydraulic passage to the wheel brakes, and between fluid communication and shut-off of a fluid passage leading from the wheel brakes to the release passage,
wherein the control device controls the valve controller to execute anti-lock brake control to switch brake hydraulic pressure acting on the wheel brakes between the pressure being decreased, the pressure being maintained, and the pressure being increased, and
the control device controls returning brake fluid released from the wheel brakes directly to the supply unit via the release passage when the pressure is decreased during the anti-lock brake control, without controlling driving the pump.

10. The vehicle brake system according to claim 9, further comprising:
a control device to control the hydraulic pressure generator and hydraulic pressure controller,
wherein the control device can execute fluid suction operation for suctioning brake fluid into the slave cylinder during anti-lock brake control, and
when the fluid suction operation needs to be executed, the control device causes the shut-off valve to be closed and controls driving a piston of the slave cylinder by the electric actuator in a direction of decreasing pressure.

11. The vehicle brake system according to claim 4, further comprising:
a control device to control the hydraulic pressure generator and hydraulic pressure controller,
wherein the control device can execute automatic brake control to assist in stabilizing the behavior of the vehicle, and
when the automatic brake control needs to be executed, the control device controls driving the electric actuator, switches the master cut valve to the mode of brake hydraulic pressure from the slave cylinder being applied to the hydraulic pressure controller, and opens the shut-off valve.

12. The vehicle brake system according to claim 4, further comprising:
a control device to control the hydraulic pressure generator and hydraulic pressure controller,
wherein when the wheel hydraulic passage needs to be supplementarily pressurized in the event that the slave cylinder has failed,
the control device sets valve opening pressure of the pressure regulating valve to a target pressure and controls driving the pump.

13. The vehicle brake system according to claim 4, wherein
the main hydraulic passage includes a first main hydraulic passage leading to at least one of the wheel brakes, and a second main hydraulic passage leading to the rest of the wheel brakes,
the master cylinder has two hydraulic chambers configured to output hydraulic pressure generated by the master cylinder to the first and second main hydraulic passages,
the slave cylinder has one hydraulic chamber configured to output hydraulic pressure generated by the slave cylinder to the first and second main hydraulic passages, and
the master cut valve, communication passage, and shut-off valve are provided in each of the first and second main hydraulic passages.
